(19) Europäisches Patentamt
European Patent Office
Office européen des brevets

(11) **EP 4 553 529 A1**

(12) **EUROPÄISCHE PATENTANMELDUNG**

(43) Veröffentlichungstag:
**14.05.2025  Patentblatt 2025/20**

(21) Anmeldenummer: **24163800.6**

(22) Anmeldetag: **15.03.2024**

(51) Internationale Patentklassifikation (IPC):
**G01S 3/04** *(2006.01)*        **G01S 3/48** *(2006.01)*

(52) Gemeinsame Patentklassifikation (CPC):
**G01S 3/48; G01S 3/043**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität:  **07.11.2023  DE 102023130758**

(71) Anmelder: **HELLA GmbH & Co. KGaA**
**59552 Lippstadt (DE)**

(72) Erfinder:
• **WEGHAUS, Ludger**
  **59556 Lippstadt (DE)**
• **CURKIN, Roman**
  **59557 Lippstadt (DE)**

(74) Vertreter: **Wichmann, Jörg**
**Hella GmbH & Co. KGaA**
**Rixbecker Straße 75**
**59552 Lippstadt (DE)**

(54) **OPTIMIERTE ANGLE OF ARRIVAL (AOA)-BESTIMMUNG**

(57)  Die Erfindung betrifft ein Verfahren zum Bestimmen eines Einfallswinkels (AoA) und/oder einer Ankunftsrichtung (DoA) einer elektromagnetischen Welle (W) von einem Mobilgerät (200) an einer Empfangseinheit (100), insbesondere an einem UWB-Empfänger, wobei die Empfangseinheit (100) mindestens zwei Empfangsantennen (AE1, AE2) aufweist, wobei zum Bestimmen des Einfallswinkels (AoA) und/oder der Ankunftsrichtung (DoA) ein Phasenunterschied (PDoA) zwischen Signalantworten (CIR) an den Empfangsantennen (AE1, AE2) ermittelt wird, wobei der Phasenunterschied (PDoA) an einer solchen Stelle in den Signalantworten (CIR) ermittelt wird, die noch vor einem jeweiligen Mittelpunkt (M) eines ersten Signalpfades (LoS) in den Signalantworten (CIR) liegt.

Fig. 2

EP 4 553 529 A1

**Beschreibung**

Die Erfindung betrifft ein Verfahren zum Bestimmen eines Einfallswinkels (eng. "angle of arrival" oder kurz AoA) und/oder einer Ankunftsrichtung (eng. "direction of arrival" oder kurz DoA) einer elektromagnetischen Welle von einem Mobilgerät an einer Empfangseinheit, insbesondere an einem UWB-Empfänger. Ferner betrifft die Erfindung ein korrespondierendes Computerprogrammprodukt, eine korrespondierende Steuereinheit und eine korrespondierende Empfangseinheit, insbesondere einen korrespondierenden UWB-Empfänger, zum Durchführen eines entsprechenden Verfahrens.

Verfahren zur Bestimmung eines Einfallswinkels bzw. einer Richtung, aus der eine elektromagnetische Funkwelle in einen Empfänger einläuft, sind grundsätzlich bekannt. Hierzu kann ein Empfänger bspw. mit zwei Empfangsantennen ausgeführt sein. Der Einfallswinkel kann aus einem Phasenunterschied (eng. "phase difference of arrival" oder kurz PDoA) an den beiden Empfangsantennen berechnet werden. Probleme ergeben sich insbesondere dann, wenn der Empfänger nah an Metall verbaut ist, was bei den Empfängern der Fall ist, die bspw. für Zugangssysteme bei Fahrzeugen genutzt werden, die nah an der Fahrzeugkarosserie verbaut werden. Durch das nahe Metall ergeben sich Signalpfade, die nur unwesentlich länger sind als der erste Signalpfad bzw. die direkte Sichtlinie des Empfängers (eng. "line of sight" oder kurz LoS), also der kürzeste Signalpfad. Solche Signalpfade können die Ermittlung des Phasenunterschieds für den kürzesten Signalpfad (also den interessanten bzw. wichtigen Signalpfad) beeinflussen, was zu falschen Ergebnissen bei dem Phasenunterschied führt und dadurch die Bestimmung des Einfallswinkels bzw. der Ankunftsrichtung negativ beeinflusst.

Ein folgendes Szenario kann bspw. beschrieben werden. Ein Mobilgerät, bspw. Smartphone, soll in Bezug zum Fahrzeug mithilfe eines Empfängers, bspw. via UWB, lokalisiert werden. Dabei kann es vorkommen, dass nur ein einziger Empfänger Signale vom Mobilgerät empfängt. Dies kann geschehen, wenn andere Empfänger abgedeckt sind und/oder wenn das Signal schwach ist. In einem solchen Fall kann dieser Empfänger die Distanz zum Mobilgerät messen. Wenn in diesem Empfänger mindestens zwei Antennen in einem definierten Abstand (kleiner als $\lambda/2$) zueinander angeordnet sind, dann kann der Phasenunterschied der Signale an den beiden Antennen ermittelt werden. Folglich kann aus dem Phasenunterschied der Einfallswinkel der Signale bestimmt werden. Diese Funktion kann für Zugangssysteme bei Fahrzeugen vorteilhaft sein.

Zumeist wird der Mittelpunkt des ersten Signalpfades der Signale für die Ermittlung des Phasenunterschieds verwendet. Wie oben bereits erläutert, kann eine solche Ermittlung des Phasenunterschieds am Mittelpunkt des ersten Signalpfades der Signale zu falschen Ergebnissen bei der Bestimmung des Einfallswinkels bzw. der Ankunftsrichtung führen. Der Grund dafür ist, dass die UWB-Impulse keine idealen Dirac-Stöße (t=0) darstellen, sondern eine begrenzte Pulsbreite, bspw. von ca. 2ns haben. Dadurch werden Signalanteile in der Kanalimpulsantwort (eng. "channel impulse response" oder kurz CIR) sichtbar, die sich über wenige Nanosekunden erstrecken. Bei einem Verbau eines UWB-Empfängers nah am Metall gibt es nun je nach Einstrahlrichtung ggf. starke Reflektionspfade, die nur wenige Zentimeter länger sind als der interessante erste Signalpfad und deren Signalanteile den Signalanteil des ersten Signalpfads überlagern und dadurch verfälschen. Es ist daher in diesem Kontext nicht optimal, den Phasenunterschied am Mittelpunkt des ersten Signalpfades zu bestimmen.

Es ist daher Aufgabe der vorliegenden Erfindung, wenigstens einen der voranstehend beschriebenen Nachteile zumindest teilweise zu überwinden. Insbesondere ist es Aufgabe der Erfindung, ein Verfahren zum Bestimmen eines Einfallswinkels und/oder einer Ankunftsrichtung einer elektromagnetischen Welle von einem Mobilgerät an einer Empfangseinheit, insbesondere an einem UWB-Empfänger, zur Verfügung zu stellen, welches eine verbesserte Bestimmung des Einfallswinkels und/oder der Ankunftsrichtung ermöglicht, welches eine verbesserte Genauigkeit aufweist, welches verbesserte Zugangsfunktionen für Fahrzeuge ermöglicht, welches den Kundenkomfort erhöht und das Vertrauen in die Zugangssysteme steigert. Ferner ist es Aufgabe der vorliegenden Erfindung, ein korrespondierendes Computerprogrammprodukt, eine korrespondierende Empfangseinheit, insbesondere einen korrespondierenden UWB-Empfänger, zum Durchführen eines entsprechenden Verfahrens bereitzustellen.

Die vorliegende Erfindung sieht ein Verfahren zum Bestimmen eines Einfallswinkels und/oder einer Ankunftsrichtung einer elektromagnetischen Welle von einem Mobilgerät an einer Empfangseinheit, insbesondere an einem UWB-Empfänger, mit den Merkmalen des unabhängigen Verfahrensanspruches vor. Ferner sieht die Erfindung ein entsprechendes Computerprogrammprodukt, eine entsprechende Steuereinheit und eine korrespondierende Empfangseinheit, insbesondere einen korrespondierenden UWB-Empfänger, mit den Merkmalen der nebengeordneten Ansprüche vor. Dabei gelten Merkmale und Details, die im Zusammenhang mit den unterschiedlichen Ausführungsformen und/oder Aspekten der Erfindung beschrieben sind, selbstverständlich auch im Zusammenhang mit den anderen Ausführungsformen und/oder Aspekten und jeweils umgekehrt, sodass bezüglich der Offenbarung zu den einzelnen Ausführungsformen und/oder Aspekten stets wechselseitig Bezug genommen wird bzw. werden kann.

Die vorliegende Erfindung sieht vor: Ein Verfahren zum Bestimmen eines Einfallswinkels und/oder einer Ankunftsrichtung einer elektromagnetischen Welle von einem Mobilgerät an einer Empfangseinheit, insbesondere an einem UWB-Empfänger. Dabei weist die Empfangseinheit mindestens zwei Empfangsantennen auf. Zum Bestimmen des Einfallswinkels und/oder der Ankunftsrichtung wird ein Phasenunterschied zwischen Signalantworten an den Empfangsantennen ermittelt. Hierzu wird vorgeschlagen, dass der Phasenunterschied an solcher(n) Stelle(n) in den Signalantworten ermittelt wird, die noch vor einem jeweiligen Mittelpunkt (M) eines ersten Signalpfades (von ersten Signalpfaden) in den Signalantworten liegt/liegen.

Die Signalantwort im Sinne der vorliegenden Offenbarung kann ebenfalls als eine Kanalimpulsantwort (eng. "channel impulse response" oder kurz CIR) bezeichnet werden.

Der erste Signalpfad bzw. die direkte Sichtlinie des Empfängers (eng. "line of sight" oder kurz LoS), also als der kürzeste Signalpfad bezeichnet werden.

Die Erfindung erkennt, dass die Ermittlung des Phasenunterschieds am Mittelpunkt des ersten Signalpfades der Signale nicht optimal ist, da sich Reflektionspfade durch metallische Teile am Fahrzeug bilden können, die den Signalanteil des ersten Signalpfads verfälschen können.

Die Erfindung schlägt nun vor, dass der Phasenunterschied in der Signalantwort nicht am Mittelpunkt des ersten Signalpfads berechnet wird, sondern an einer früheren (vorzugsweise möglichst frühen) Stelle, in der die Signalantwort bspw. einen bestimmten bzw. gezielt gesetzten Schwellwert überschreitet.

Auf diese Weise wird der Einfluss von Signalanteilen der etwas längeren Reflektionspfade, die den Signalanteil des ersten Signalpfads überlagern und dadurch verfälschen können, bei der Ermittlung des Phasenunterschiedes reduziert.

Ferner kann vorgesehen sein, dass der Phasenunterschied an der Stelle (bzw. an solchen Stellen) von Signalantworten ermittelt wird, die in den Signalantworten einen bestimmten, vorzugsweise gezielt ausgewählten bzw. berechneten, Schwellenwert überschreitet (bzw. überschreiten). Somit kann ermöglicht werden, dass der Phasenunterschied an einer früheren Stelle (sobald wie möglich) ermittelt werden kann, nämlich dann, wenn die Signalantwort den Schwellenwert überschritten hat.

Weiterhin kann vorgesehen sein, dass der Schwellwert derart bestimmt wird, dass die Stelle(n), an denen der Phasenunterschied ermittelt wird, möglichst früh in den Signalantworten vorkommt/vorkommen und bereits oberhalb eines Rauschpegels (bzw. von Rauschpegeln) liegen. Auf diese Weise kann ermöglicht werden, dass der Phasenunterschied sobald wie möglich ermittelt werden kann, nämlich dann, wenn die Signalantwort von dem Rauschpegel unterschieden werden kann.

Zum einen ist es denkbar, dass der Schwellenwert in Abhängigkeit eines Absolutwertes einer Signalantwort bestimmt werden kann. Zum anderen ist es denkbar, dass der Schwellenwert in Abhängigkeit eines Absolutwerts eines Realteils und/oder in Abhängigkeit eines Absolutwerts eines Imaginärteils einer Signalantwort bestimmt werden kann. Der Schwellenwert kann bspw. so bestimmt werden, dass in der Signalantwort (bspw. Absolutwert der Signalantwort, die einen Realteil und einen Imaginärteil hat und als komplexe Zahl betrachtet werden kann) zeitlich mindestens 2 bis 5 ns vor dem erkannten Mittelpunkt des ersten Signalpfads eine Vielzahl von Werten abgewartet werden, die durch Rauschen begründet sind. Der Schwellenwert kann bspw. so gewählt werden, dass er oberhalb des Rauschpegels liegt. Es kann somit eine Stelle bzw. ein Punkt der Signalantwort betrachtet werden, in der/dem die Signalkurve noch zum Mittelpunkt des ersten Signalpfads hochläuft. Als Signale können der Absolutwert der Signalantwort und/oder der Absolutwert des Realteils und/oder der Absolutwert des Imaginärteils der Signalantwort betrachtet werden.

Darüber hinaus ist es denkbar, dass, wenn der Schwellenwert in Abhängigkeit eines Absolutwerts) eines Realteils und in Abhängigkeit eines Absolutwerts) eines Imaginärteils einer Signalantwort bestimmt wird, der jeweils frühere Zeitpunkt als relevante Stelle zum Ermitteln des Phasenunterschieds gewählt werden kann. Mit anderen Worten kann jeweils der jeweils frühere Zeitpunkt als relevant für die Ermittlung gewählt werden.

Des Weiteren kann vorgesehen sein, dass der Schwellenwert in Abhängigkeit von zwei Schwellenwerten bestimmt wird. Bspw. ist es denkbar, dass der Schwellenwert als ein Maximalwert von zwei Schwellenwerten bestimmt werden kann. Ferner kann ein erster Schwellenwert in Abhängigkeit von einem Rauschpegel und einem ersten Faktor, insbesondere größer eins, bestimmt werden. Weiterhin kann ein zweiter Schwellenwert in Abhängigkeit von dem ersten Signalpfad in den Signalantworten und einem zweiten Faktor, insbesondere kleiner eins, bestimmt werden. Der Schwellwert kann mit anderen Worten als eine Kombination von zwei unterschiedlich berechneten Schwellwerten definiert werden, z. B. als ein Maximalwert bzw. der größere der beiden Schwellenwerte.

Der erste Schwellenwert kann ein Schwellwert sein, der sicherstellt, dass die Signalantwort aus dem Rauschen heraus ist und erste Signalanteile des ersten Signalpfads wirksam werden. Man kann dabei einen ersten Faktor definieren, der bspw. deutlich größer als 1, z. B. 5, ist, mit dem man den Rauschpegel multipliziert. Bspw. kann ein Maximalwert von zahlreichen Absolutwerten im Rauschbereich gewählt werden, um den Rauschpegel zu bestimmen. Dann kann der erste Schwellenwert wie folgt bestimmt werden:

$$S1 = F1 * \max(\mathrm{abs}(CIR\_Noise)).$$

Der zweite Schwellenwert kann ein Schwellwert sein, der einen Bruchteil des Mittelwerts bzw. des Picks des ersten Signalpfads der Signalkurve darstellen kann. Dabei kann ein zweiter Faktor kleiner als 1, z. B. 0.2, definiert werden, sodass der zweite Schwellenwert wie folgt bestimmt werden kann:

$$S2 = F2 * abs (CIR\_Pick).$$

Um sicherzustellen, dass der finale Schwellwert sowohl ausreichend über dem Rauschpegel liegt als auch möglichst früh vor dem Mittelwert bzw. Pick des ersten Signalpfads der Signalkurve kommt, kann der finale Schwellwert aus der Kombination von zwei Schwellenwerten bestimmt werden.

Vorteilhafterweise können die Signalantworten an den zwei Empfangsantennen, insbesondere mithilfe der jeweils früheren Zeitpunkte als relevante Stelle zum Ermitteln des Phasenunterschieds, synchronisiert werden. Wenn die Abtastung von den Empfangsantennen nicht exakt synchron stattfindet, dann können die Signalantworten vorzugsweise anhand des früheren Zeitpunktes synchronisiert werden, wodurch bspw. eine leichte Verschiebung entlang der x-Achse stattfinden kann, sodass der jeweils frühere Zeitpunkt bei beiden Empfangsantennen exakt übereinander liegt.

Vorzugsweise kann bei einer Bestimmung einer Phasenlage für eine erste Empfangsantenne und einer Phasenlage für eine zweite Empfangsantenne ein eventueller Phasenoffset berücksichtigt werden, der bspw. durch das Antennendesign begründet sein kann. Mit anderen Worten kann bei der Bestimmung der Phasenlage für die erste Empfangsantenne und die zweite Empfangsantenne ein eventueller Phasenoffset, der z. B. durch das Antennendesign begründet sein kann, berücksichtigt werden.

Ferner ist es denkbar, dass, wenn die Empfangsantennen einen unterschiedlichen ersten Signalpfad in den Signalantworten erkennen und/oder ausgeben, dann für die Bestimmung des Schwellenwerts vorzugsweise der frühere erste Signalpfad verwendet wird. Weiterhin ist es denkbar, dass, wenn die Empfangsantennen einen unterschiedlichen ersten Signalpfad in den Signalantworten erkennen und/oder ausgeben, dann für die Bestimmung des Schwellenwerts der erste Signalpfad einer vordefinierten Empfangsantenne verwendet wird. Auf diese Weise kann eine zuverlässige Bestimmung trotz etwaiger Signalunterschiede ermöglicht werden.

Des Weiteren kann vorgesehen sein, dass die Signalantworten mithilfe eines Filters zu einer stetigen Kurve interpoliert werden, insbesondere mit einem Anteil, bspw. einem Zehntel, einer Abtastschrittweite von Signalantworten, vorzugsweise mithilfe eines Filters mit einer Eigenschaft, dass die Stelle(n) in den Signalantworten zum Ermitteln des Phasenunterschieds unverändert bleibt/bleiben. Da die Signalantworten zumeist zu festen Abtastzeitpunkten, bspw. mit 1 GHz, abgetastet werden und sich somit in den Zeitschritten, bspw. jede 1 ns, Rohwerte in der jeweiligen Signalantwort ergeben, kann es vorteilhaft sein, dass diese Rohwerte mittels eines Filters zu einer weichen Kurve, mit z. B. einem Zehntel (o. Ä.) der tatsächlichen Abtastschrittweite interpoliert werden. Vorzugsweise kann dabei ein Filter mit der Eigenschaft verwendet werden, dass die Stützstellen im interpolierten Signal unverändert bleiben.

Zudem kann vorgesehen sein, dass beim Bestimmen des Einfallswinkels und/oder der Ankunftsrichtung eine Ortshistorie des Mobilgeräts berücksichtigt wird. Auf diese Weise können verbesserte Ergebnisse erzielt werden.

Außerdem kann vorgesehen sein, dass beim Bestimmen des Einfallswinkels und/oder der Ankunftsrichtung der Phasenunterschied über ein Zeitfenster mehrfach ermittelt wird, und ein Ergebnis in Abhängigkeit von den ermitteln Werten, bspw. als ein Mittelwert, bestimmt wird. Auf diese Weise kann eine zuverlässige Ermittlung ermöglicht werden.

Vorteilhafterweise kann eine Signalstärke am ersten Signalpfad und/oder an der Stelle (bzw. den Stellen) in den Signalantworten, die zum Ermitteln des Phasenunterschieds benutzt wird (bzw. werden), berücksichtigt werden, um das Bestimmen des Einfallswinkels und/oder der Ankunftsrichtung zu verfeinern. Vorzugsweise kann berücksichtigt werden, dass die Signalstärke der Signalantwort bei der Empfangsantenne größer ist, die näher am Mobilgerät ist.

Außerdem kann vorgesehen sein, dass zum Bestimmen des Einfallswinkels und/oder der Ankunftsrichtung ausgewählte Ergebnisse bei der Ermittlung des Phasenunterschieds berücksichtigt werden, die vorzugsweise mithilfe eines Verfahrens zum maschinellen Lernen ausgewählt werden, und/oder die insbesondere von unterschiedlichen Empfangseinheiten stammen. Vorteilhafterweise können ausgegebene Zusatzinformationen, wie bspw. Signalstärken, z. B. in Verbindung mit den berechneten für den Phasenunterschied, mittels Verfahren zum maschinellen Lernen untersucht werden, um die bestmöglichen Ergebnisse aus dem vorhandenen Datenmaterial zu bestimmen. Ein Antrainieren kann dabei sowohl während der Entwicklung als auch im Feld erfolgen. Im Feld, wenn bspw. das Fahrzeug verkauft und auf der Straße ist, kann der Einfallswinkel und/oder die Ankunftsrichtung dann - zumindest immer, wenn dies möglich ist - mittels Multilateration bestimmt werden. Dazu kommt noch, dass nur Datenmaterial benutzt wird, das eine hohe Verlässlichkeit aufweist.

Darüber hinaus kann vorgesehen sein, dass beim Bestimmen des Einfallswinkels und/oder der Ankunftsrichtung ein Verlässlichkeitswert (eng. confidence level" oder kurz C) ausgegeben wird, der bspw. von einer Signalstärke und/oder von dem bestimmten Einfallswinkel und/oder von der bestimmten Ankunftsrichtung abhängen kann. Vorzugsweise können zum Bestimmen des Einfallswinkels und/oder der Ankunftsrichtung Ergebnisse unterschiedlichen Empfangseinheiten berücksichtigt werden. Bevorzugt können zum Bestimmen des Einfallswinkels und/oder der Ankunftsrichtung Ergebnisse einer solchen Empfangseinheit berücksichtigt werden, die einen hohen, vorteilhafterweise den höchsten, Verlässlichkeitswert aufweisen. Vorzugsweise kann der beste Wert mithilfe eines Verfahrens zum maschinellen Lernen ausgewählt werden. Zusätzlich zum Phasenunterschied (bzw. dem daraus resultierenden Einfallswinkel und/oder der Ankunftsrichtung) kann ein zugehöriger beschreibender Verlässlichkeitswert berechnet und ausgegeben werden. Der Verlässlichkeitswert, also die Information über die Verlässlichkeit der Ergebnisse der Ermittlung des Phasenunterschieds bzw. der Bestimmung des Einfallswinkels, ist bei senkrecht auftreffenden Wellenfronten (AoA=0°) am höchsten und sinkt zu den Grenzbereichen hin, d. h., wenn die Wellenfronten von der Seite her einlaufen (AoA ca. -90° oder 90°). Die Berechnung dieses Wertes kann vorzugsweise auch durch zusätzliche Messungen am Fahrzeug verbessert werden, wenn z. B. bekannt ist, dass bestimmte Winkellagen ungenauere Ergebnisse liefern. Eine Kalibrierung mithilfe des Verlässlichkeitswerts kann im Feld, vorzugsweise selbstlernend, erfolgen. Bspw. immer dann, wenn mehrere UWB-Empfänger gleichzeitig im Zugriff sind bzw. wenn mehrere UWB-Empfänger Distanzen zum Mobilgerät messen können. Dann kann man über eine Multilateration den realen Ort des Mobilgeräts relativ zum Fahrzeug bestimmen.

Vorteilhafterweise können ferner die Positionen der UWB-Empfänger am Fahrzeug berücksichtigt werden, um die Ergebnisse der Ermittlung des Phasenunterschieds bzw. der Bestimmung des Einfallswinkels zu verbessern.

Die vorliegende Erfindung sieht vor: Ein Computerprogrammprodukt, umfassend Befehle, die bei der Ausführung des Computerprogrammprodukts durch einen Computer diesen veranlassen, ein Verfahren durchzuführen, welches wie oben beschrieben ablaufen kann. Mithilfe des Computerprogrammprodukts können die gleichen Vorteile erreicht werden, die oben im Zusammenhang mit dem erfindungsgemäßen Verfahren beschrieben wurden. Auf diese Vorteile wird vorliegend vollumfänglich Bezug genommen.

Die vorliegende Erfindung sieht vor: Eine Steuereinheit (ECU), aufweisend eine Recheneinheit und eine Speichereinheit, in welcher ein Code hinterlegt ist, welcher bei zumindest teilweiser Ausführung durch die Recheneinheit ein Verfahren durchführt, welches wie oben beschrieben ablaufen kann. Mithilfe der Steuereinheit (ECU) können die gleichen Vorteile erreicht werden, die oben im Zusammenhang mit dem erfindungsgemäßen Verfahren beschrieben wurden. Auf diese Vorteile wird vorliegend vollumfänglich Bezug genommen.

Die vorliegende Erfindung sieht vor: Eine Empfangseinheit (100), insbesondere einen UWB-Empfänger, für ein Fahrzeug, aufweisend eine Steuereinheit (ECU), die wie oben beschrieben ausgeführt sein kann. Mithilfe der Empfangseinheit (100) können die gleichen Vorteile erreicht werden, die oben im Zusammenhang mit dem erfindungsgemäßen Verfahren beschrieben wurden. Auf diese Vorteile wird vorliegend vollumfänglich Bezug genommen.

Anhand der beigefügten Zeichnungen wird die Erfindung nachfolgend näher erläutert. Dabei zeigt:

Fig. 1    eine beispielhafte Erklärung zum Durchführen eines Verfahrens,

Fig. 2    eine beispielhafte Darstellung der Stellen in den Signalantworten, an denen verbesserte Ergebnisse erzielt werden können.

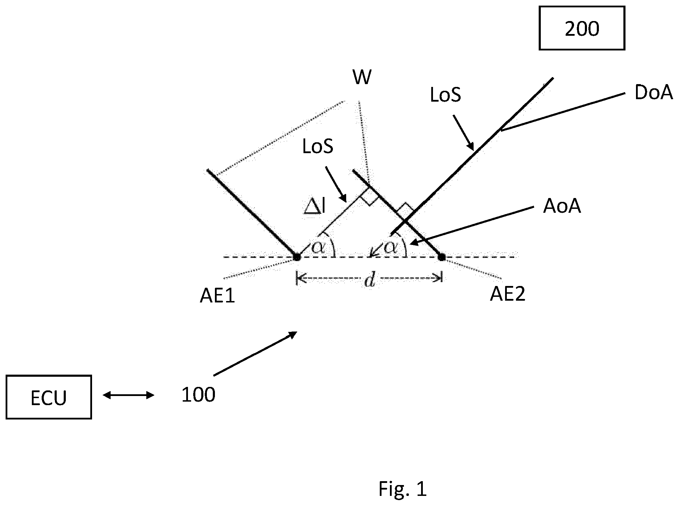

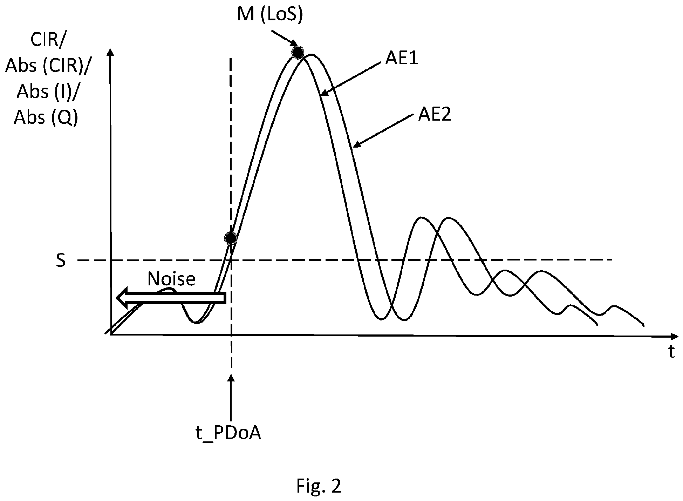

Die Erfindung schlägt ein Verfahren zum Bestimmen eines Einfallswinkels (eng. "angle of arrival" oder kurz AoA) und/oder einer Ankunftsrichtung (eng. "direction of arrival" oder kurz DoA) einer elektromagnetischen Welle W von einem Mobilgerät 200 an einer Empfangseinheit 100, insbesondere an einem UWB-Empfänger, welches mithilfe der Fig. 1 und 2 erklärt wird.

Bei der Empfangseinheit 100 bzw. bei dem UWB-Empfänger können mindestens zwei Empfangsantennen AE1 und AE2 vorgesehen sein.

Der Einfallswinkel AoA, welcher in der Fig. 1 ebenfalls als $\alpha$ bezeichnet ist, kann aus einem Phasenunterschied (eng. "phase difference of arrival" oder kurz PDoA) an den beiden Empfangsantennen AE1, AE2 berechnet werden.

Die Erfindung erkennt, dass, wenn die Empfangseinheit 100 bzw. der UWB-Empfänger nah an Metall verbaut ist, bspw. nahe einer Fahrzeugkarosserie, können sich Probleme bei der Ermittlung des Phasenunterschieds PDoA bzw. des Einfallswinkels AoA bzw. der Ankunftsrichtung DoA ergeben.

Durch das nahe Metall können sich Signalpfade ergeben, die nur unwesentlich länger sind als der erste Signalpfad (eng. "line of sight" oder kurz LoS) bzw. die direkte Sichtlinie der Empfangseinheit 100 bzw. des UWB-Empfängers, also der kürzeste Signalpfad. Solche Signalpfade können die Ermittlung des Phasenunterschieds PDoA für den kürzesten Signalpfad bzw. den ersten Signalpfad LoS (also den interessanten bzw. wichtigen Signalpfad) beeinflussen, was zu falschen Ergebnissen bei der Ermittlung des Phasenunterschieds PDoA führt und dadurch die Bestimmung des Einfallswinkels AoA bzw. der Ankunftsrichtung DoA negativ beeinflusst.

Ein folgendes Anwendungsbeispiel ist denkbar. Ein Mobilgerät 200, bspw. Smartphone, soll in Bezug zum Fahrzeug mithilfe der Empfangseinheit 100 bzw. des UWB-Empfängers, lokalisiert werden. Dabei kann es vorkommen, dass nur ein einziger UWB-Empfänger Signale vom Mobilgerät 200 empfängt. Dies kann geschehen, wenn bspw. andere UWB-Empfänger abgedeckt sind und/oder wenn das Signal vom Mobilgerät 200 schwach ist. In einem solchen Fall kann der UWB-Empfänger die Distanz zum Mobilgerät 200 messen. Wenn in diesem Empfänger mindestens zwei Empfangsantennen AE1, AE2 in einem definierten Abstand d (d kleiner als λ/2) zueinander angeordnet sind, dann kann der Phasenunterschied PDoA der Signale an den beiden Empfangsantennen AE1, AE2 ermittelt werden. Aus dem Phasenunterschied PDoA kann folglich der Einfallswinkel AoA bzw. die Ankunftsrichtung DoA der Signale bestimmt werden. Diese Funktion kann für Zugangssysteme bei Fahrzeugen vorteilhaft sein.

Der Phasenunterschied PDoA kann ebenfalls als Phasendifferenz ΔΦ bezeichnet werden und der Einfallswinkel AoA als Winkel α.

Die betrachtete Wellenfront W trifft bei der zweiten Empfangsantenne AE2 zum Zeitpunkt $t0$ ein und bei der ersten Empfangsantenne AE1 zum Zeitpunkt ($t0 + \Delta l/c0$) mit der Pfaddifferenz $\Delta l$ wie in Fig. 1 dargestellt. Damit und mit der Periodendauer T bzw. der Frequenz f erhält man:

$$\Delta\Phi = 2\,\pi\,f\,(\Delta l\,/\,c_0).$$

Der Bezug zum Einfallswinkel AoA ist wie folgt:

$$\Delta\Phi = (2\,\pi\,/\,\lambda)\,d\,\cos\,\alpha.$$

Wenn die Phasendifferenz ΔΦ bzw. der Phasenunterschied PDoA bekannt ist, dann kann der Einfallswinkel AoA wie folgt berechnet werden:

$$\alpha = \arccos\,((\Delta\Phi\,\lambda)\,/\,(2\,\pi\,d)).$$

Bei den bekannten Verfahren wird der Mittelpunkt M bzw. der Peak im ersten Signalpfad LoS der Signale für die Ermittlung des Phasenunterschieds PDoA verwendet. Wie oben bereits erläutert, kann eine solche Ermittlung des Phasenunterschieds am ersten Signalpfad der Signale zu falschen Ergebnissen bei der Bestimmung des Einfallswinkels AoA bzw. der Ankunftsrichtung DoA führen.

Die Erfindung erkennt nun, dass die UWB-Impulse keine idealen Dirac-Stöße t=0 darstellen, sondern eine begrenzte Pulsbreite, bspw. von ca. 2ns, aufweisen. Dadurch werden Signalanteile in der Kanalimpulsantwort (eng. "channel impulse response" oder kurz CIR) sichtbar, die sich über wenige Nanosekunden erstrecken. Bei einem Verbau eines UWB-Empfängers nah am Metall gibt es nun je nach Einstrahlrichtung ggf. starke Reflektionspfade, die nur wenige Zentimeter länger sind als der interessante erste Signalpfad LoS und deren Signalanteile den Signalanteil des ersten Signalpfads überlagern und dadurch verfälschen. Es ist daher in diesem Kontext nicht optimal, den Phasenunterschied erst am Mittelpunkt M bzw. Peak des ersten Signalpfades LoS zu bestimmen.

Das vorgeschlagene Verfahren ermöglicht eine verbesserte Bestimmung des Einfallswinkels AoA und/oder der Ankunftsrichtung DoA, welches eine verbesserte Genauigkeit aufweist, welches verbesserte Zugangsfunktionen für Fahrzeuge ermöglicht, welches den Kundenkomfort erhöht und das Vertrauen in die Zugangssysteme steigert.

Wie es die Fig. 2 andeutet, wird gemäß der Erfindung vorgeschlagen, dass der Phasenunterschied PDoA an einer solchen Stelle (bzw. an solchen Stellen) in den Signalantworten CIR ermittelt wird, die noch vor (gemeint ist dabei zeitlich) einem jeweiligen Mittelpunkt M eines ersten Signalpfades LoS in den Signalantworten CIR liegt (bzw. liegen).

Die Erfindung schlägt mit anderen Worten vor, dass der Phasenunterschied PDoA in der Signalantwort CIR nicht am Mittelpunkt M des ersten Signalpfades LoS berechnet wird, sondern an einer früheren (vorzugsweise möglichst frühen) Stelle, in der die Signalantwort CIR bspw. einen bestimmten bzw. gezielt gesetzten Schwellwert S überschreitet.

Auf diese Weise kann der Einfluss von Signalanteilen der etwas längeren Reflektionspfade, die den Signalanteil des ersten Signalpfads LoS überlagern und dadurch verfälschen können, in der Ermittlung des Phasenunterschiedes PDoA reduziert werden.

Wie es die Fig. 2 andeutet, kann der Schwellenwert S derart bestimmt werden, dass die Stelle oder die Stellen, an der/denen der Phasenunterschied PDoA ermittelt wird, möglichst früh in den Signalantworten CIR vorkommen und bereits oberhalb eines Rauschpegels Noise liegt/liegen.

Wie es die Fig. 2 lediglich schematisch andeutet, ist es denkbar, dass der Schwellenwert S in Abhängigkeit eines Absolutwertes Abs CIR einer Signalantwort CIR bestimmt werden kann. Zum anderen ist es denkbar, dass der Schwellenwert S in Abhängigkeit eines Absolutwerts Abs I eines Realteils I und/oder in Abhängigkeit eines Absolutwerts Abs Q eines Imaginärteils Q einer Signalantwort CIR bestimmt werden kann.

Der Schwellenwert S kann bspw. so bestimmt werden, dass in der Signalantwort CIR (bspw. Absolutwert Abs CIR der Signalantwort CIR, die einen Realteil I und einen Imaginärteil Q hat und als komplexe Zahl betrachtet werden kann) zeitlich mindestens 2..5ns vor dem erkannten Mittelpunkt M des ersten Signalpfads LoS eine Vielzahl von Werten abgewartet werden, die durch Rauschen Noise begründet sind.

Der Schwellenwert S kann bspw. so gewählt werden, dass er oberhalb des Rauschpegels Noise liegt. Es kann somit eine Stelle bzw. ein Punkt der Signalantwort CIR betrachtet werden, in der/dem die Signalkurve noch zum Mittelpunkt M des ersten Signalpfads CIR hochläuft.

Als Signale können der Absolutwert Abs CIR der Signalantwort CIR und/oder der Absolutwert Abs I des Realteils I und/oder der Absolutwert Abs Q des Imaginärteils Q der Signalantwort CIR betrachtet werden (s. Fig. 2).

Des Weiteren ist es denkbar, dass der Schwellenwert S in Abhängigkeit von zwei Schwellenwerten S1, S2 bestimmt wird. Bspw. ist es denkbar, dass der Schwellenwert S als ein Maximalwert max (S1, S2) von zwei Schwellenwerten S1, S2 bestimmt werden kann.

Bspw. kann ein erster Schwellenwert S1 in Abhängigkeit von einem Rauschpegel Noise und einem ersten Faktor F1, insbesondere größer eins, bestimmt werden.

Bspw. kann ein zweiter Schwellenwert S2 in Abhängigkeit von dem ersten Signalpfad LoS in den Signalantworten CIR und einem zweiten Faktor F2, insbesondere kleiner eins, bestimmt werden.

Der erste Schwellenwert S1 kann ein Schwellwert sein, der sicherstellt, dass die Signalantwort CIR aus dem Rauschen Noise heraus ist und erste Signalanteile des ersten Signalpfades wirksam werden. Man kann dabei einen ersten Faktor F1 definieren, der bspw. deutlich größer als 1, z. B. 5, ist, mit dem man den Rauschpegel Noise multipliziert. Bspw. kann ein Maximalwert von zahlreichen Absolutwerten Abs CIR im Rauschbereich gewählt werden, um den Rauschpegel Noise zu bestimmen. Dann kann der erste Schwellenwert S1 wie folgt bestimmt werden:

$$S1 = F1 * \max (\text{abs} (CIR\_Noise)).$$

Der zweite Schwellenwert S2 kann ein Schwellwert sein, der einen Bruchteil des Mittelwerts M bzw. des Picks Abs (CIR_Pick) des ersten Signalpfads der Signalkurve darstellen kann. Dabei kann ein zweiter Faktor F2 kleiner als 1, z. B. 0.2, definiert werden, sodass der zweite Schwellenwert S2 wie folgt bestimmt werden kann:

$$S2 = F2 * \text{abs} (CIR\_Pick).$$

Um sicherzustellen, dass der finale Schwellwert S sowohl ausreichend über dem Rauschpegel Noise liegt als auch möglichst früh vor dem Mittelwert M bzw. Pick abs (CIR_Pick) des ersten Signalpfades der Signalkurve kommt, kann der finale Schwellwert S aus der Kombination von zwei Schwellenwerten S1, S2 bestimmt werden.

Bei der Bestimmung der Phasenlage für die erste Empfangsantenne AE1 und die zweite Empfangsantenne AE2 kann ein eventueller Phasenoffset berücksichtigt werden, der z. B. durch das Antennendesign begründet sein kann.

Weiterhin ist es denkbar, dass, wenn die Empfangsantennen AE1, AE2 einen unterschiedlichen ersten Signalpfad LoS in den Signalantworten CIR erkennen und/oder ausgeben, dann für die Bestimmung des Schwellenwerts S vorzugsweise der frühere erste Signalpfad LoS verwendet wird. Auf diese Weise kann eine zuverlässige Bestimmung trotz etwaiger Signalunterschiede ermöglicht werden.

Da die Signalantworten CIR zumeist zu festen Abtastzeitpunkten, bspw. mit 1 GHz, abgetastet werden und sich somit in den Zeitschritten, bspw. jede 1 ns, Rohwerte in der jeweiligen Signalantwort CIR ergeben, kann es vorteilhaft sein, dass diese Rohwerte mittels eines Filters zu einer weichen Kurve, mit z. B. einem Zehntel (o. Ä.) der tatsächlichen Abtastschrittweite interpoliert werden. Vorzugsweise kann dabei ein Filter mit der Eigenschaft verwendet werden, dass die Stützstellen im interpolierten Signal unverändert bleiben.

Vorteilhafterweise beim Bestimmen des Einfallswinkels AoA und/oder der Ankunftsrichtung DoA eine Ortshistorie des Mobilgeräts 200 berücksichtigt werden.

Außerdem kann beim Bestimmen des Einfallswinkels AoA und/oder der Ankunftsrichtung DoA der Phasenunterschied PDoA über ein Zeitfenster mehrfach ermittelt wird, und ein Ergebnis in Abhängigkeit von den ermitteln Werten, bspw. als ein Mittelwert, bestimmt werden.

Vorteilhafterweise kann eine Signalstärke am ersten Signalpfad LoS und/oder an der Stelle (oder an den Stellen) in den Signalantworten CIR, die zum Ermitteln des Phasenunterschieds PDoA benutzt wird (oder werden), berücksichtigt werden, um das Bestimmen des Einfallswinkels AoA und/oder der Ankunftsrichtung DoA zu verfeinern.

Vorzugsweise kann berücksichtigt werden, dass die Signalstärke der Signalantwort CIR bei der Empfangsantenne AE1, AE2 größer ist, die näher am Mobilgerät 200 ist.

Außerdem können zum Bestimmen des Einfallswinkels AoA und/oder der Ankunftsrichtung DoA ausgewählte Ergebnisse bei der Ermittlung des Phasenunterschieds PDoA berücksichtigt werden, die vorzugsweise mithilfe eines Verfahrens zum maschinellen Lernen ausgewählt werden, und/oder die insbesondere von unterschiedlichen Empfangseinheiten 100 stammen. Vorteilhafterweise können ausgegebene Zusatzinformationen, wie bspw. Signalstärken, z. B. in Verbindung mit den berechneten für den Phasenunterschied PDoA, mittels Verfahren zum maschinellen Lernen untersucht werden, um die bestmöglichen Ergebnisse aus dem vorhandenen Datenmaterial zu bestimmen. Ein Antrainieren kann dabei sowohl während der Entwicklung als auch im Feld erfolgen. Im Feld, wenn bspw. das Fahrzeug verkauft und auf der Straße ist, kann der Einfallswinkel AoA und/oder die Ankunftsrichtung DoA dann - zumindest immer, wenn dies möglich ist - mittels Multilateration bestimmt werden. Dazu kommt noch, dass nur Datenmaterial benutzt wird, das eine hohe Verlässlichkeit aufweist.

Darüber hinaus kann beim Bestimmen des Einfallswinkels AoA und/oder der Ankunftsrichtung DoA ein Verlässlichkeitswert C (eng. "confidence level" oder kurz C) ausgegeben werden, der bspw. von einer Signalstärke und/oder von dem bestimmten Einfallswinkel AoA und/oder von der bestimmten Ankunftsrichtung DoA abhängen kann.

Vorzugsweise können zum Bestimmen des Einfallswinkels AoA und/oder der Ankunftsrichtung DoA Ergebnisse unterschiedlichen Empfangseinheiten 100 berücksichtigt werden.

Bevorzugt können zum Bestimmen des Einfallswinkels AoA und/oder der Ankunftsrichtung DoA Ergebnisse einer solchen Empfangseinheit 100 berücksichtigt werden, die einen hohen, vorteilhafterweise den höchsten Verlässlichkeitswert C aufweisen.

Vorzugsweise kann der beste Wert mithilfe eines Verfahrens zum maschinellen Lernen ausgewählt werden.

Der Verlässlichkeitswert C, also die Information über die Verlässlichkeit der Ergebnisse der Ermittlung des Phasenunterschieds PDoA bzw. der Bestimmung des Einfallswinkels AoA, ist bei senkrecht auftreffenden Wellenfronten (AoA=0°) am höchsten und sinkt zu den Grenzbereichen hin, d. h., wenn die Wellenfronten von der Seite her einlaufen (AoA ca. -90° oder 90°).

Die Berechnung dieses Wertes kann vorzugsweise auch durch zusätzliche Messungen am Fahrzeug verbessert werden, wenn z.B. bekannt ist, dass bestimmte Winkellagen ungenauere PDoA- bzw. AoA-Ergebnisse liefern.

Eine Kalibrierung mithilfe des Verlässlichkeitswerts C kann im Feld, vorzugsweise selbstlernend, erfolgen. Bspw. immer dann, wenn mehrere UWB-Empfänger gleichzeitig im Zugriff sind bzw. wenn mehrere UWB-Empfänger Distanzen zum Mobilgerät messen können. Dann kann man über eine Multilateration den realen Ort des Mobilgeräts 200 relativ zum Fahrzeug bestimmen.

Vorteilhafterweise können ferner die Positionen der UWB-Empfänger am Fahrzeug berücksichtigt werden, um die Ergebnisse der Ermittlung des Phasenunterschieds PDoA bzw. der Bestimmung des Einfallswinkels AoA zu verbessern.

Ferner betrifft die Erfindung ein korrespondierendes Computerprogrammprodukt, eine korrespondierende Steuereinheit und eine korrespondierende Empfangseinheit 100, insbesondere einen korrespondierenden UWB-Empfänger, zum Durchführen eines entsprechenden Verfahrens.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

Bezugszeichenliste

| | |
|---|---|
| 100 | Empfangseinheit, UWB-Empfänger |
| 200 | Mobilgerät |
| | |
| AE1 | Empfangsantenne |
| AE2 | Empfangsantenne |
| | |
| W | Welle |

| | |
|---|---|
| CIR | Signalantwort |
| Abs | Absolutwert |
| I | Realteil |
| Q | Imaginärteil |
| | |
| LoS | erster Signalpfad |
| | |
| AoA, $\alpha$ | Einfallswinkel, Winkel |
| DoA | Ankunftsrichtung |
| PDoA, $\Delta\Phi$ | Phasenunterschied, Phasendifferenz |
| t_PDoA | früherer Zeitpunkt |
| | |
| S | Schwellenwert |
| Noise | Rauschpegel, Rauschen |
| | |
| $\Delta I$ | Pfaddifferenz |
| d | Abstand |
| | |
| ECU | Steuereinheit |

**Patentansprüche**

1. Verfahren zum Bestimmen eines Einfallswinkels (AoA) und/oder einer Ankunftsrichtung (DoA) einer elektromagnetischen Welle (W) von einem Mobilgerät (200) an einer Empfangseinheit (100), insbesondere an einem UWB-Empfänger,

   wobei die Empfangseinheit (100) mindestens zwei Empfangsantennen (AE1, AE2) aufweist, wobei zum Bestimmen des Einfallswinkels (AoA) und/oder der Ankunftsrichtung (DoA) ein Phasenunterschied (PDoA) zwischen Signalantworten (CIR) an den Empfangsantennen (AE1, AE2) ermittelt wird, wobei der Phasenunterschied (PDoA) an einer solchen Stelle in den Signalantworten (CIR) ermittelt wird, die noch vor einem jeweiligen Mittelpunkt (M) eines ersten Signalpfades (LoS) in den Signalantworten (CIR) liegt.

2. Verfahren nach Anspruch 1,
   wobei der Phasenunterschied (PDoA) an der Stelle von Signalantworten (CIR) ermittelt wird, die in den Signalantworten (CIR) einen bestimmten Schwellenwert (S) überschreitet.

3. Verfahren nach Anspruch 2,
   wobei der Schwellenwert (S) derart bestimmt wird, dass die Stelle, an der der Phasenunterschied (PDoA) ermittelt wird, möglichst früh - also noch vor dem Mittelpunkt (M) - in den Signalantworten (CIR) vorkommt und bereits oberhalb von einem Rauschpegel (Noise) liegt.

4. Verfahren nach Anspruch 2 oder 3,

   wobei der Schwellenwert (S) in Abhängigkeit eines Absolutwertes (Abs (CIR)) einer Signalantwort (CIR) bestimmt wird,
und/oder wobei der Schwellenwert (S) in Abhängigkeit eines Absolutwerts (Abs (I)) eines Realteils (I) und/oder in Abhängigkeit eines Absolutwerts (Abs (Q)) eines Imaginärteils (Q) einer Signalantwort (CIR) bestimmt wird.

5. Verfahren nach einem der vorhergehenden Ansprüche 2 bis 4,

    wobei, wenn der Schwellenwert (S) in Abhängigkeit eines Absolutwerts (Abs (I)) eines Realteils (I) und in Abhängigkeit eines Absolutwerts (Abs (Q)) eines Imaginärteils (Q) einer Signalantwort (CIR) bestimmt wird,
    der jeweils frühere Zeitpunkt (t_PDoA) als relevante Stelle zum Ermitteln des Phasenunterschieds (PDoA) gewählt wird.

6. Verfahren nach einem der vorhergehenden Ansprüche 2 bis 5,

    wobei der Schwellenwert (S) in Abhängigkeit von zwei Schwellenwerten (S1, S2) bestimmt wird,
    und/oder wobei der Schwellenwert (S) als ein Maximalwert (max (S1, S2)) von zwei Schwellenwerten (S1, S2) bestimmt wird,
    und/oder wobei ein erster Schwellenwert (S1) in Abhängigkeit von einem Rauschpegel (Noise) und einem ersten Faktor (F1), insbesondere größer eins, bestimmt wird,
    und/oder wobei ein zweiter Schwellenwert (S2) in Abhängigkeit von dem ersten Signalpfad (LoS) in den Signalantworten (CIR) und einem zweiten Faktor (F2), insbesondere kleiner eins, bestimmt wird.

7. Verfahren nach einem der vorhergehenden Ansprüche,
wobei bei einer Bestimmung einer Phasenlage für eine erste Empfangsantenne (AE1) und einer Phasenlage für eine zweite Empfangsantenne (AE2) ein eventueller Phasenoffset berücksichtigt wird, der bspw. durch das Antennendesign begründet sein kann.

8. Verfahren nach einem der vorhergehenden Ansprüche,

    wobei, wenn die Empfangsantennen (AE1, AE2) einen unterschiedlichen ersten Signalpfad (LoS) in den Signalantworten (CIR) erkennen und/oder ausgeben,
    dann für die Bestimmung des Schwellenwerts (S) vorzugsweise der frühere erste Signalpfad (LoS) verwendet wird

oder der erste Signalpfad (LoS) einer vordefinierten Empfangsantenne (AE1 oder AE2) verwendet wird.

9. Verfahren nach einem der vorhergehenden Ansprüche,

    wobei die Signalantworten (CIR) mithilfe eines Filters zu einer stetigen Kurve interpoliert werden,
    insbesondere mit einem Anteil, bspw. einem Zehntel, einer Abtastschrittweite von Signalantworten (CIR),
    vorzugsweise mithilfe eines Filters mit einer Eigenschaft, dass die Stelle in den Signalantworten (CIR) zum Ermitteln des Phasenunterschieds (PDoA) unverändert bleibt,
    und/oder wobei beim Bestimmen des Einfallswinkels (AoA) und/oder der Ankunftsrichtung (DoA) eine Ortshistorie des Mobilgeräts (200) berücksichtigt wird,
    und/oder wobei der Phasenunterschied (PDoA) über ein Zeitfenster mehrfach ermittelt wird und ein Ergebnis in Abhängigkeit von den ermitteln Werten, bspw. als ein Mittelwert, bestimmt wird.

10. Verfahren nach einem der vorhergehenden Ansprüche,
wobei eine Signalstärke am ersten Signalpfad (LoS) und/oder an der Stelle in den Signalantworten (CIR), die zum Ermitteln des Phasenunterschieds (PDoA) benutzt wird, berücksichtigt wird, um das Bestimmen des Einfallswinkels (AoA) und/oder der Ankunftsrichtung (DoA) zu verfeinern, und/oder wobei berücksichtigt wird, dass die Signalstärke der Signalantwort (CIR) bei der Empfangsantenne (AE1, AE2) größer ist, die näher am Mobilgerät (200) ist.

11. Verfahren nach einem der vorhergehenden Ansprüche,

    wobei zum Bestimmen des Einfallswinkels (AoA) und/oder der Ankunftsrichtung (DoA) ausgewählte Ergebnisse bei der Ermittlung des Phasenunterschieds (PDoA) berücksichtigt werden,
    die vorzugsweise mithilfe eines Verfahrens zum maschinellen Lernen ausgewählt werden,
    und/oder die insbesondere von unterschiedlichen Empfangseinheiten (100) stammen.

12. Verfahren nach einem der vorhergehenden Ansprüche,

    wobei beim Bestimmen des Einfallswinkels (AoA) und/oder der Ankunftsrichtung (DoA) ein Verlässlichkeitswert (C) ausgegeben wird, der insbesondere von einer Signalstärke und/oder von dem bestimmten Einfallswinkel (AoA) und/oder von der bestimmten Ankunftsrichtung (DoA) abhängt,

und/oder zum Bestimmen des Einfallswinkels (AoA) und/oder der Ankunftsrichtung (DoA) Ergebnisse unterschiedlichen Empfangseinheiten (100) berücksichtigt werden,

wobei bevorzugt zum Bestimmen des Einfallswinkels (AoA) und/oder der Ankunftsrichtung (DoA) Ergebnisse einer solchen Empfangseinheit (100) berücksichtigt werden, die einen hohen Verlässlichkeitswert (C) aufweist, der vorzugsweise mithilfe eines Verfahrens zum maschinellen Lernen ausgewählt wird,

und/oder wobei beim Bestimmen des Einfallswinkels (AoA) und/oder der Ankunftsrichtung (DoA) Positionen der Empfangseinheiten (100) am Fahrzeug berücksichtigt werden.

13. Computerprogrammprodukt, umfassend Befehle, die bei der Ausführung des Computerprogrammprodukts durch einen Computer diesen veranlassen, ein Verfahren nach einem der vorhergehenden Ansprüche durchzuführen.

14. Steuereinheit (ECU), aufweisend eine Recheneinheit und eine Speichereinheit, in welcher ein Code hinterlegt ist, welcher bei zumindest teilweiser Ausführung durch die Recheneinheit ein Verfahren nach einem der vorhergehenden Ansprüche 1 bis 12 durchführt.

15. Empfangseinheit (100), insbesondere ein UWB-Empfänger, für ein Fahrzeug, aufweisend eine Steuereinheit (ECU) nach dem vorhergehenden Anspruch.

Fig. 1

Fig. 2

Europäisches
Patentamt

European
Patent Office

Office européen
des brevets

# EUROPÄISCHER RECHERCHENBERICHT

**Nummer der Anmeldung**

EP 24 16 3800

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/373112 A1 (TERTINEK STEFAN [AT] ET AL) 2. Dezember 2021 (2021-12-02) <br> * Abbildungen 1, 6-7 * <br> * Absatz [0011] - Absatz [0014] * <br> * Absatz [0019] - Absatz [0030] * <br> * Absatz [0044] - Absatz [0048] * <br> - - - - - | 1-15 | INV. <br> G01S3/04 <br> G01S3/48 |
| A | US 2022/404451 A1 (ALAWIEH MOHAMMAD [DE] ET AL) 22. Dezember 2022 (2022-12-22) <br> * Absatz [0074] - Absatz [0075] * <br> - - - - - | 4-6,8 | |
| A | US 2022/390541 A1 (CHEN QIANG [US] ET AL) 8. Dezember 2022 (2022-12-08) <br> * Absatz [0004] - Absatz [0005] * <br> - - - - - | 10,12 | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| München | 26. August 2024 | Bomart, Sébastien |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 3800

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-08-2024

| Im Recherchenbericht angeführtes Patentdokument | Datum der Veröffentlichung | Mitglied(er) der Patentfamilie | Datum der Veröffentlichung |
|---|---|---|---|
| US 2021373112 A1 | 02-12-2021 | KEINE | |
| US 2022404451 A1 | 22-12-2022 | EP 3819657 A1 | 12-05-2021 |
| | | EP 4055406 A1 | 14-09-2022 |
| | | US 2022404451 A1 | 22-12-2022 |
| | | WO 2021089258 A1 | 14-05-2021 |
| US 2022390541 A1 | 08-12-2022 | KEINE | |

EPO FORM P0461

Für nähere Einzelheiten zu diesem Anhang : siehe Amtsblatt des Europäischen Patentamts, Nr.12/82